# FASCICULE DE BREVET EUROPEEN

(11) **EP 2 564 237 B1**
(45) Date de publication et mention de la délivrance du brevet: **17.05.2017**
(21) Numéro de dépôt: 11714573.0
(22) Date de dépôt: 18.04.2011
(51) Int. Cl.: G01S 19/11

(54) **SYSTÈME DE POSITIONNEMENT PAR PSEUDOLITES**
POSITIONIERUNGSSYSTEM MIT PSEUDOLITEN
PSEUDOLITE POSITIONING SYSTEM

(30) Priorité: 30.04.2010 FR 1001868
(43) Date de publication de la demande: 06.03.2013
(73) Titulaire: Thales, 92400 Courbevoie (FR)
(72) Inventeur: KUBRAK, Damien, F-31400 Toulouse (FR)
(74) Mandataire: Brunelli, Gérald
(86) Numéro de dépôt international: PCT/EP2011/056131
(87) Numéro de publication internationale: WO 2011/134821

(56) Documents cités:
- EP-A1- 1 742 080
- EP-A1- 1 901 084
- US-A1- 2007 257 831
- VERVISCH-PICOIS A ET AL: "Interference Mitigation in a Repeater and Pseudolite Indoor Positioning System", IEEE JOURNAL OF SELECTED TOPICS IN SIGNAL PROCESSING, IEEE, US, vol. 3, no. 5, 1 octobre 2009 (2009-10-01) , pages 810-820, XP011278687, ISSN: 1932-4553, DOI: DOI:10.1109/JSTSP.2009.2027805
- CHANGDON KEE, HAEYOUNG JUN , DOOHEE YUN: "Indoor Navigation System using Asynchronous Pseudolites", THE JOURNAL OF NAVIGATION, vol. 56, no. 3, 26 août 2003 (2003-08-26), pages 443-455, XP002613322, DOI: 10.1017/S0373463303002467

## Description

La présente invention concerne un système permettant à un objet équipé d'un récepteur adapté de déterminer sa position dans une zone dite contrainte.

Plus particulièrement, le système de positionnement selon la présente invention est fondé sur l'utilisation de pseudolites.

Comme cela est connu, les pseudolites, contraction de pseudo-satellites, sont des dispositifs fonctionnant selon les mêmes principes que les satellites appartenant à des constellations de satellites mises en oeuvre dans le cadre de systèmes globaux de navigation par satellites, connus sous l'acronyme anglo-saxon de GNSS, pour Global Navigation Satellite System, tels que le système GPS, pour Global Positioning System en anglais, ou le système Galileo. A la différence des satellites, les pseudolites sont déployés au sol. Ils peuvent être répartis dans un bâtiment, et de manière générale, dans des zones dites contraintes.

Dans un système de positionnement par pseudolites, lesdits pseudolites émettent des signaux de positionnement dont le format est identique ou similaire à celui des messages émis par les satellites d'un système de navigation par satellites. Ces signaux de positionnement sont notamment caractérisés par leur désynchronisation temporelle et par leur désynchronisation fréquentielle, ou fréquence Doppler apparente, au niveau du récepteur. Dans ce cadre, on attribue généralement à chaque pseudolite un identifiant de la même famille que celui d'un satellite. Dans le contexte des constellations de satellites, ces identifiants sont appelés des codes d'étalement, comme cela est connu de l'homme du métier.

La portée des signaux émis par les pseudolites est variable ; elle dépend de leur puissance, et de leur utilisation. Des objets équipés de récepteurs adaptés peuvent acquérir ces signaux de positionnement. Comme pour un système de navigation par satellites classique, un calcul de pseudo-distances entre ledit récepteur et les pseudolites dont il a acquis les signaux, puis un calcul de position par triangulation, permettent de déterminer la localisation du récepteur. Le principe du positionnement par triangulation est connu : il s'agit de déterminer la position d'un récepteur comme étant à l'intersection de sphères de centre les émetteurs et de rayon la distance entre récepteur et émetteurs. Les calculs peuvent être effectués de manière embarquée, par l'objet lui-même, ou de manière délocalisée par un calculateur.

Comme on l'a vu, les systèmes de positionnement par pseudolites sont généralement déployés dans des zones dites « contraintes ». Ces zones contraintes peuvent être des bâtiments à l'intérieur desquels les signaux de positionnement émis par des satellites en orbite autour de la Terre ne peuvent pas être acquis, en raison du masquage produit par les murs, les plafonds...etc. Il peut s'agir simplement de zones non couvertes par le système de navigation par satellites considéré. De manière générale, on définira une zone contrainte comme étant une zone dans laquelle des signaux de positionnement émis par des satellites ne peuvent pas être correctement acquis. A contrario, on parle de « zone ouverte » dans les zones où des signaux de positionnement émis par des satellites peuvent être acquis par un récepteur adapté. D'autre part, les satellites dont un récepteur peut théoriquement recevoir des signaux de positionnement, du fait de la position relative adéquate entre lesdits satellites et ledit récepteur, sont dits « visibles » du récepteur, tandis que les autres satellites de la constellation sont dits « non visibles ». Ces termes consacrés, « visible » et « non visible » sont utilisables dans le cas de pseudolites, l'adéquation des positions relatives étant dans ce cas déterminée non par la géométrie du globe terrestre, mais par les masquages locaux qui peuvent affecter les signaux des pseudolites.

Les définitions données ci-dessus des termes « zone contrainte », « zone ouverte », satellite ou pseudolite « visible » et satellite ou pseudolite « non visible » valent pour toute la suite de la description et pour les revendications. La demande de brevet européen EP 1742080 est représentative de cet état de la technique.

Un problème connu inhérent au positionnement par pseudolites a trait au fait que le passage d'une zone contrainte, dans laquelle la position d'un objet équipé d'un récepteur est calculée grâce aux signaux de positionnement émis par des pseudolites à une zone ouverte dans laquelle les signaux de positionnement exploités sont émis par des satellites d'un GNSS doit être transparent pour le récepteur. Les systèmes de positionnement par pseudolites connus imposent ainsi aux récepteurs de chercher en permanence à acquérir des signaux de positionnement sur l'ensemble de ses voies. Un certain nombre de voies est consacré à l'acquisition de signaux de positionnement émis par des satellites visibles ; ces voies sont associées aux codes d'étalement correspondants auxdits satellites visibles. D'autres voies sont associées aux codes d'étalement des pseudolites de la zone contrainte dans laquelle ou à proximité de laquelle se trouve l'objet. En général, l'ensemble des voies disponibles des récepteurs sont consacrés à la recherche de signaux de positionnement à acquérir.

Un mode de réalisation de la présente invention permet de résoudre cet inconvénient, en permettant de ne consacrer qu'une voie à l'acquisition de signaux émis par des pseudolites.

Mais par ailleurs, la problématique principale attachée aux systèmes de positionnement par pseudolites et que permet de résoudre la présente invention est liée à la perturbation des signaux de positionnement émis par les satellites des GNSS sur lesquels s'appuient lesdits systèmes de positionnement par pseudolites.

En effet, ce problème connu sous le terme anglais de « near-far » provient du fait que les signaux de positionnement émis par les pseudolites présentent une puissance généralement très supérieure à celle des signaux émis par des satellites. Ainsi, un utilisateur situé à proximité d'une zone contrainte est susceptible de recevoir un signal de positionnement émis par un pseudolite de la zone contrainte avec une puissance de l'ordre de 50 fois celle des signaux des satellites du GNSS censés lui permettre de calculer sa position. Dans ce cas, le signal du pseudolite « noie » les signaux des satellites et perturbe ou empêche le positionnement correct de l'utilisateur. Des problèmes majeurs peuvent se poser, notamment en matière de sécurité dans le domaine de l'aviation civile.

Pour tenter de résoudre ce problème, des solutions connues consistent à optimiser le traitement des signaux reçus par le récepteur à l'aide de traitements appropriés au sein du récepteur. Cependant, ces solutions connues ne sont pas satisfaisantes car elles impliquent une consommation d'énergie et un temps de traitement accrus pour le récepteur. De plus, le dit récepteur doit être spécifiquement adapté, ce qui représente une contrainte importante pour les utilisateurs.

Un but de l'invention est notamment de pallier les inconvénients précités. Pour résoudre le problème de « near-far » explicité ci-dessus, l'objet de la revendication 1 comprend des moyens pour contrôler la désynchronisation temporelle et la fréquence Doppler apparente des signaux émis par les pseudolites du système de positionnement par pseudolites selon l'invention, de telle sorte que les signaux émis par les pseudolites ne puissent pas « noyer » les signaux provenant de satellites de GNSS.

Plus précisément, l'invention a pour objet un système de positionnement d'un objet dans une zone d'intérêt présentant une zone contrainte, ledit système comprenant un ensemble de pseudolites répartis dans la zone contrainte, lesdits pseudolites présentant un code d'étalement correspondant au code d'étalement d'un satellite appartenant à une constellation de satellites d'un système de navigation par satellites, et émettant des signaux de positionnement caractérisés par leur désynchronisation temporelle et leur fréquence Doppler apparente, et ledit objet comprenant un récepteur apte à acquérir les signaux de positionnement. Dans le système selon l'invention, ladite désynchronisation temporelle et/ou ladite fréquence Doppler apparente des signaux de positionnement émis par les pseudolites sont configurées de manière à ce qu'il n'existe aucune ambiguïté sur la localisation des pics de corrélation dans la matrice d'ambiguïtés définie par le retard et la fréquence Doppler apparente des signaux de positionnement acquis par le récepteur.

Avantageusement, le système selon l'invention comprend un serveur comprenant des moyens pour contrôler la désynchronisation temporelle et/ou la fréquence Doppler apparente des signaux de positionnement émis par les pseudolites.

Avantageusement, ledit serveur comprend en outre des moyens pour contrôler la puissance des signaux de positionnement émis par les pseudolites.

Avantageusement, la désynchronisation temporelle et la fréquence Doppler apparente des signaux de positionnement émis par les pseudolites sont préalablement paramétrés au niveau de chaque pseudolite.

Selon un mode de réalisation, tous les pseudolites présentent le même code d'étalement.

Le récepteur comprenant un nombre de voies supérieur à 1 pour la recherche et l'acquisition de signaux de positionnement, ledit récepteur peut avantageusement ne consacrer qu'une seule voie à la recherche de signaux de positionnement émis des pseudolites.

Selon un mode de réalisation les signaux de positionnement émis par les pseudolites présentent des fréquences appartenant à une plage de fréquences sans intersection avec la plage de fréquences utilisée pour émettre des signaux de positionnement par les satellites appartenant à la constellation de satellites du système de navigation par satellites considéré.

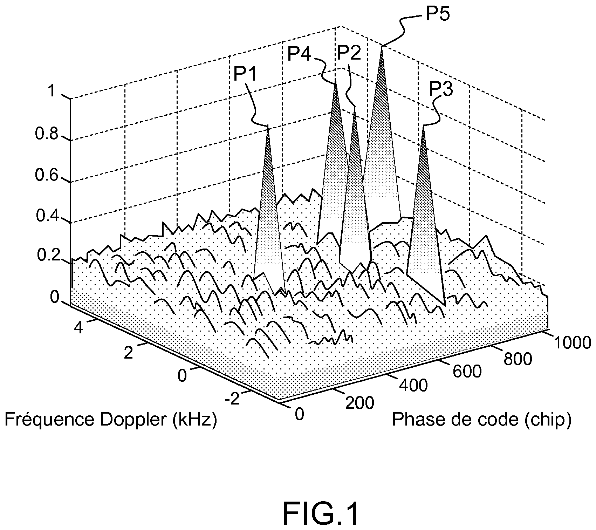

D'autres caractéristiques et avantages de l'invention apparaîtront à l'aide de la description qui suit faite en regard du diagramme de la figure 1 annexée qui représente une matrice d'ambiguïtés définie par le retard et la fréquence Doppler apparente des signaux de positionnement acquis par le récepteur.

La figure 1 illustre la partie caractérisante de la revendication 1.

On définit comme une matrice d'ambiguïtés la matrice qui rassemble les matrices d'acquisition des différents signaux, avec comme axes le retard de propagation - ou phase de code - et la fréquence Doppler. La figure 1 est ainsi une représentation d'une matrice d'ambiguïtés. Un pic de corrélation P1, P2, P3, P4, P5 correspond à un pic que l'on peut observer sur une matrice d'acquisition.

Ainsi, dans le système de positionnement par pseudolites selon l'invention, N pseudolites, N étant supérieur ou égal à 2, sont déployés dans une zone contrainte. Le système comprend par ailleurs des moyens aptes à configurer la caractéristique des signaux de positionnement que lesdits pseudolites émettent. Dans le principal mode de réalisation de l'invention, la configuration des signaux de positionnement émis par les pseudolites est réalisée à distance par un serveur. Alternativement, la configuration peut consister en une programmation préalable de l'ensemble des pseudolites.

La caractéristique des signaux de positionnement comprend leur puissance d'émission, leur désynchronisation temporelle et leur désynchronisation fréquentielle. La configuration de la désynchronisation fréquentielle permet de conférer aux signaux de positionnement une fréquence Doppler apparente du point de vue du récepteur.

Pour mettre en oeuvre l'invention, il faut contrôler au moins la désynchronisation temporelle ou la désynchronisation fréquentielle des signaux de positionnement.

Le principe de l'invention consiste donc à configurer au moins la désynchronisation temporelle ou la désynchronisation fréquentielle des signaux émis par les pseudolites, ou les deux, de telle sorte que, dans la matrice d'ambiguïtés définie par le retard et la fréquence Doppler apparente des signaux de positionnement acquis par le récepteur, il n'existe aucune ambiguïté sur la localisation des pics de corrélation P1, P2, P3, P4, P5, comme le montre la figure 1. Cela est rendu possible par le décalage dans les désynchronisations fréquentielle et/ou temporelle des différents signaux de positionnement émis par les différents pseudolites et acquis par le récepteur.

Ainsi, par une configuration adaptée de la caractéristique des signaux de positionnement émis par les pseudolites, il est possible de résoudre le problème de « near-far » évoqué précédemment. En effet, le récepteur ayant acquis un ensemble de signaux de positionnement peut discriminer lesdits signaux les uns des autres par une analyse de la matrice d'ambiguïtés décrite précédemment. En effet, chaque pic de corrélation P1, P2, P3, P4, P5 correspondant à un signal de positionnement acquis par le récepteur est clairement localisé ; son contenu peut donc être traité sans qu'il ait été brouillé par l'un quelconque des autres signaux de positionnement reçus.

D'autre part, s'il connaît la position des différents pseudolites dans la zone contrainte, le récepteur peut, une fois les pics de corrélation P1, P2, P3, P4, P5 localisés, attribuer chaque pic de corrélation à un pseudolite identifié. Il est par conséquent possible d'utiliser un unique code d'étalement pour l'ensemble des pseudolites, ce qui présente l'avantage de libérer des voies de traitement du récepteur. De plus, cela facilite la recherche de signaux de positionnement en provenance de pseudolites puisque le récepteur n'a besoin de scanner qu'une seule voie. Enfin, comme une seule voie du récepteur est utilisée, une fonction de type « snapshot », consistant à déterminer rapidement la position de l'objet considéré est également facilitée et rendue économe en batterie, pour la même raison.

D'autre part, pour améliorer la performance du système, il est possible de choisir des fréquences d'émission des signaux de positionnement émis par les pseudolites sans intersection avec la plage fréquentielle utilisée par les satellites du GNSS considéré. Cela permet de minimiser le risque d'interférences entre les signaux émis par les pseudolites et ceux émis par les satellites du GNSS correspondant.

Enfin, selon un mode de réalisation préféré de l'invention, le système de positionnement par pseudolites comprend également des moyens pour contrôler la puissance d'émission des signaux de positionnement par les pseudolites. Le même serveur que pour la désynchronisation temporelle ou la fréquence Doppler apparente des signaux de positionnement peut le cas échéant être programmé pour configurer individuellement ladite puissance d'émission des signaux de positionnement. De cette façon, il est possible de s'assurer que les signaux de positionnement issus des pseudolites ne vont pas « noyer » les signaux provenant de satellites, et de résoudre avec encore plus de sécurité le problème de « near-far » décrit précédemment.

En résumé, l'invention a pour principal avantage de proposer une solution au problème de « near-far » concernant les systèmes de positionnement par pseudolites.

Les autres avantages importants de la présente invention concernent le positionnement à l'aide d'un code unique et la réduction de consommation.

## Revendications

1. Système de positionnement d'un objet dans une zone d'intérêt présentant une zone contrainte, ledit système comprenant un ensemble de pseudolites répartis dans la zone contrainte, lesdits pseudolites présentant un code d'étalement correspondant au code d'étalement d'un satellite appartenant à une constellation de satellites d'un système de navigation par satellites, et émettant des signaux de positionnement **caractérisés par** leur désynchronisation temporelle et leur fréquence Doppler apparente, et ledit objet comprenant un récepteur apte à acquérir les signaux de positionnement,
**caractérisé en ce qu'**il comprend un serveur comprenant des moyens pour configurer ladite désynchronisation temporelle et/ou ladite fréquence Doppler apparente des signaux de positionnement émis par les pseudolites de manière à ce qu'il n'existe aucune ambiguïté sur la localisation des pics de corrélation (P1, P2, P3, P4, P5) dans la matrice d'ambiguïtés définie par le retard et la fréquence Doppler apparente des signaux de positionnement acquis par le récepteur.

2. Système selon la revendication 1, **caractérisé en ce que** ledit serveur comprend en outre des moyens pour contrôler la puissance des signaux de positionnement émis par les pseudolites.

3. Système selon la revendication 1, **caractérisé en ce que** la désynchronisation temporelle et la fréquence Doppler apparente des signaux de positionnement émis par les pseudolites sont préalablement paramétrés au niveau de chaque pseudolite.

4. Système selon l'une quelconque des revendications précédentes, **caractérisé en ce que** tous les pseudolites présentent le même code d'étalement.

5. Système selon la revendication 4, le récepteur comprenant un nombre de voies supérieur à 1 pour la recherche et l'acquisition de signaux de positionnement, **caractérisé en ce que** ledit récepteur peut ne consacrer qu'une seule voie à la recherche de signaux de positionnement émis des pseudolites.

6. Système selon l'une quelconque des revendications précédentes, caractérisé en ce les signaux de positionnement émis par les pseudolites présentent des fréquences appartenant à une plage de fréquences sans intersection avec la plage de fréquences utilisée pour émettre des signaux de positionnement par les satellites appartenant à la constellation de satellites du système de navigation par satellites considéré.

## Patentansprüche

1. System zum Positionieren eines Objekts in einer Zone von Interesse, die eine beschränkte Zone aufweist, wobei das System eine Gruppe von Pseudoliten umfasst, die in der beschränkten Zone verteilt sind, wobei die Pseudolite einen Spreizcode aufweisen, der dem Spreizcode eines Satelliten entspricht, der zu einer Satellitenkonstellation eines Satellitennavigationssystems gehört, und Positionierungssignale aussenden, die durch ihre zeitliche Desynchronisation und ihre scheinbare Doppler-Frequenz charakterisiert sind, wobei das Objekt einen Empfänger zum Erfassen der Positionierungssignale umfasst,
**dadurch gekennzeichnet, dass** es einen Server umfasst, der Mittel zum Konfigurieren der zeitlichen Desynchronisation und/oder der scheinbaren Doppler-Frequenz von von den Pseudoliten emittierten Positionierungssignalen umfasst, so dass keine Ambiguität in Bezug auf die Lokalisierung von Korrelationspeaks (P1, P3, P3, P4, P5) in der Ambiguitätsmatrix existiert, die durch die Verzögerung und die scheinbare Doppler-Frequenz der vom Empfänger erfassten Positionierungssignale definiert wird.

2. System nach Anspruch 1, **dadurch gekennzeichnet, dass** der Server ferner Mittel zum Regeln der Leistung der von den Pseudoliten emittierten Positionierungssignale umfasst.

3. System nach Anspruch 1, **dadurch gekennzeichnet, dass** die zeitliche Desynchronisation und die scheinbare Doppler-Frequenz von von den Pseudoliten emittierten Positionierungssignalen zuvor an jedem Pseudolit parametrisiert werden.

4. System nach einem der vorherigen Ansprüche, **dadurch gekennzeichnet, dass** alle Pseudolite denselben Spreizcode aufweisen.

5. System nach Anspruch 4, wobei der Empfänger eine Anzahl von Kanälen größer als 1 für die Suche und Erfassung von Positionierungssignalen umfasst, **dadurch gekennzeichnet, dass** der Empfänger nur einen einzigen Kanal für die Suche von von den Pseudoliten emittierten Positionierungssignalen dedizieren kann.

6. System nach einem der vorherigen Ansprüche, **dadurch gekennzeichnet, dass** die von den Pseudoliten emittierten Positionierungssignale Frequenzen aufweisen, die zu einem Frequenzbereich ohne Schnittpunkt mit dem Frequenzbereich gehören, der zum Emittieren der Positionierungssignale durch die Satelliten benutzt wird, die zu der Satellitenkonstellation des betrachteten Satellitennavigationssystems gehören.

## Claims

1. System for positioning an object in a zone of interest which has a restricted zone, the system comprising an assembly of pseudolites which are distributed in the restricted zone, the pseudolites having a spreading code which corresponds to the spreading code of a satellite which belongs to an arrangement of satellites of a satellite navigation system and transmitting positioning signals **characterised by** their temporal desynchronisation and their apparent Doppler frequency, and the object comprising a receiver which is capable of acquiring the positioning signals,
**characterised in that** it comprises a server comprising means for configuring the temporal desynchronisation and/or the apparent Doppler frequency of the positioning signals transmitted by the pseudolites so that there is no ambiguity relating to the location of the correlation peaks (P1, P2, P3, P4, P5) in the matrix of ambiguities defined by the delay and the apparent Doppler frequency of the positioning signals acquired by the receiver.

2. System according to claim 1, **characterised in that** the server further comprises means for controlling the power of the positioning signals transmitted by the pseudolites.

3. System according to claim 1, **characterised in that** the temporal desynchronisation and the apparent Doppler frequency of the positioning signals transmitted by the pseudolites are parameterised beforehand at each pseudolite.

4. System according to any one of the preceding claims, **characterised in that** all the pseudolites have the same spreading code.

5. System according to claim 4, the receiver comprising a number of channels greater than 1 for the search for and acquisition of positioning signals, **characterised in that** the receiver can allocate only one channel to searching for positioning signals transmitted from the pseudolites.

6. System according to any one of the preceding claims, **characterised in that** the positioning signals transmitted by the pseudolites have frequencies which belong to a range of frequencies without any intersection with the range of frequencies used to emit positioning signals via the satellites which belong to the arrangement of satellites of the satellite navigation system in question.
